# FASCICULE DE BREVET EUROPEEN

(11) **EP 2 932 545 B1**
(45) Date de publication et mention de la délivrance du brevet: **07.12.2016**
(21) Numéro de dépôt: 13824195.5
(22) Date de dépôt: 11.12.2013
(51) Int. Cl.: H01M 4/36, C01B 31/00, H01M 4/583, H01M 6/14, H01M 4/02

(54) **UTILISATION DE NANOOBJETS EN CARBONE SOUS FLUORE COMME MATÉRIAU D'ÉLECTRODE DE BATTERIES PRIMAIRES AU LITHIUM DE FORTES CAPACITÉS**
VERWENDUNG VON SUBFLUORINIERTEN KOHLENSTOFFNANOOBJEKTEN ALS ELEKTRODENMATERIAL PRIMÄRER LITHIUMBATTERIEN MIT STARKEN KAPAZITÄTEN
USE OF SUBFLUORINATED CARBON NANO-OBJECTS AS AN ELECTRODE MATERIAL OF PRIMARY LITHIUM BATTERIES WITH STRONG CAPACITIES

(30) Priorité: 12.12.2012 FR 1261927
(43) Date de publication de la demande: 21.10.2015
(73) Titulaire: Université Blaise Pascal - Clermont-Ferrand II, 63006 Clermont-Ferrand Cedex (FR)
(72) Inventeur: GUERIN ARAUJO DA SILVA, Katia, F-63430 Pont du Chateau (FR); DUBOIS, Marc Denis Alphonse, F-57000 Metz (FR); HAMWI, André, F-63000 Clermont-Ferrand (FR)
(74) Mandataire: Novagraaf Technologies
(86) Numéro de dépôt international: PCT/IB2013/060805
(87) Numéro de publication internationale: WO 2014/091422

(56) Documents cités:
- WO-A2-2007/098369
- WO-A2-2007/098478
- WO-A2-2007/126436
- US-A1- 2007 231 696
- YASSER AHMAD ET AL: "The synthesis of multilayer graphene materials by the fluorination of carbon nanodiscs/nanocones", CARBON, ELSEVIER, OXFORD, GB, vol. 50, no. 10, 9 avril 2012 (2012-04-09) , pages 3897-3908, XP028509431, ISSN: 0008-6223, DOI: 10.1016/J.CARBON.2012.04.034 [extrait le 2012-04-13] cité dans la demande
- ZHANG W ET AL: "Effect of graphitization on fluorination of carbon nanocones and nanodiscs", CARBON, ELSEVIER, OXFORD, GB, vol. 47, no. 12, 6 juin 2009 (2009-06-06), pages 2763-2775, XP026420975, ISSN: 0008-6223 [extrait le 2009-06-06]

## Description

L'invention concerne l'utilisation de nanoobjets en carbone sous fluoré en tant que matériau d'électrode de batteries primaires au lithium de capacité supérieure à la capacité théorique, l'électrode obtenue par cette utilisation ainsi qu'une batterie au lithium comprenant une telle électrode.

De nombreuses recherches ont été menées sur l'amélioration des performances des batteries primaires au lithium.

Certaines de ces recherches se sont tournées vers la composition des électrodes de telles batteries, en particulier la cathode.

Ainsi, des batteries primaires au lithium comprenant une cathode en oxyde manganèse ont une densité d'énergie de 150 à 330 Wh. Kg⁻¹, les batteries au lithium avec une électrode permettant de dégager du SO₂ ont une densité d'énergie de 150 à 315 Wh. Kg⁻¹, les batteries au lithium ayant une électrode en SOCl₂ ont une densité d'énergie de 220 à 560 Wh. Kg⁻¹.

Enfin, les batteries au lithium avec une électrode en carbone fluoré de formule CFₓ, avec x représentant le rapport molaire F/C variant entre 0,5 et 1,2, ont une densité d'énergie de 260 à 780 Wh. Kg⁻¹.

Les carbones fluorés de composition CF₁ peuvent délivrer une capacité théorique de 865 mAh.g⁻¹ lorsqu'ils sont utilisés comme matériau d'électrode de batterie primaire au lithium. L'augmentation de la teneur en fluor au-delà de CF₁ (CF_{1,2}) n'est pas bénéfique pour la capacité en raison de la création de groupements CF₂ et CF₃ non actifs électrochimiquement.

Cette capacité théorique correspond à la conversion électrochimique de toute liaison C-F.

En effet, au sein de la batterie primaire au lithium, le processus électrochimique dans une électrode de carbone fluoré (CFₓ) implique la rupture de la liaison C-F par apport d'un électron du circuit extérieur. L'ion fluorure alors formé se combine à un ion lithium provenant de l'électrolyte pour constituer LiF.

xLi → xLi⁺ + xe⁻

CFx + xLi → C + xLiF

Cette réaction est irréversible. Pour obtenir le maximum de capacité (ou de quantité de courant, pour la pile), la stratégie a donc longtemps consisté à choisir un carbone fluoré présentant un taux de fluoration le plus élevé possible, c'est-à-dire une composition CF₁ (chaque atome de carbone est lié à un fluor) voire CF_{1.1-1.2} (pour des composés faiblement organisés structuralement comme les cokes de pétrole avec des tailles faibles de feuillets graphitiques, des groupements CF₂ et CF₃ peuvent se former durant la fluoration). Cette stratégie présente un inconvénient majeur, le caractère isolant des CFₓ hautement fluorés, qui génère des surtensions dans la pile et abaissent le rendement faradique (le rapport de la capacité expérimentale sur la capacité théorique).

Par ailleurs, Yasser Ahmad et al. ont décrit dans "The synthesis of multilayer graphene materials by the fluorination of carbon nanodiscs/nanocones", CARBON 50 (2012) 3897-3908, des nanomatériaux multifeuillets en carbone sous fluoré obtenus par le procédé dit de sous-fluoration.

Ce procédé se caractérise par deux points essentiels, le matériau de départ est un nanomatériau et la fluoration est une sous-fluoration (une partie des atomes de carbone reste non-fluorée) obtenue soit par fluoration directe avec du fluor moléculaire (F₂) soit par fluoration contrôlée en utilisant un agent fluorant solide TbF₄.

On appellera, dans l'invention, les matériaux ainsi obtenus "grains micrométriques en carbone sous fluorés".

Or, les inventeurs ont maintenant découvert que de façon surprenante, ces grains micrométriques en carbone sous fluorés ont une capacité, lorsqu'utilisés en tant qu'électrode de batterie primaire au lithium, supérieure à la limite théorique de 865 mAh.g⁻¹.

L'utilisation de grains micrométriques en carbone sous fluoré telle que proposée par l'invention est définie dans les revendications. Il en est de même de l'électrode de batterie primaire au lithium qui comprend des grains micrométriques en carbone sous fluoré.

L'invention propose également une pile au lithium primaire caractérisée en ce qu'elle comprend une électrode selon l'invention.

L'invention sera mieux comprise et d'autres caractéristiques et avantages de celle-ci apparaîtront plus clairement à la lecture de la description explicative qui sui et qui est faite en référence aux figures dans desquelles :
- la figure 1 est une représentation schématique agrandie d'une vue en coupe transversale d'un empilement de nanodisques en carbone sous fluoré utilisés dans l'invention,
- la figure 2 est une représentation schématique agrandie d'une vue en coupe transversale d'un nanotube en carbone sous fluoré double parois utilisé dans l'invention,
- la figure 3 est une représentation schématique agrandie d'une vue en coupe d'un grain de graphite en carbone sous fluoré utilisé dans l'invention,
- la figure 4 représente la courbe de décharge galvanostatique à 10 mA/g (C/100) d'une cathode en graphite fluoré commercial de composition CF_{0,92} (électrolyte EC/PC/3DMC-LiPF₆ 1 M),
- la figure 5 représente la courbe de décharge galvanostatique à 10 mA/g (C/70) de grains micrométriques de graphite en carbone sous fluoré de composition CF_{0,59} selon l'invention (électrolyte EC/PC/3DMC-LiPF₆ 1 M),
- la figure 6 représente la courbe de décharge galvanostatique à 10 mA/g de nanodisques en carbone sous fluoré de composition CF_{0,80} selon l'exemple 3 (électrolyte EC/PC/3DMC-LiPF₆ 1 M),
- la figure 7 représente la courbe de décharge galvanostatique à 10 mA/g de nanodisques en carbone sous fluoré de composition CF_{0,95} selon l'exemple 4 (électrolyte PC-LiClO₄ 1 M),
- la figure 8 représente la courbe de décharge galvanostatique à 10 mA/g (C/70) de nanotubes en carbone sous fluoré double parois (DWCNT)
- la figure 9 représente la courbe de décharge galvanostatique à 10 mA/g (C/70) de nanotubes en carbone sous fluoré avec peu de parois (few-walled carbon nanotubes FWCNT) selon l'exemple 5,
- la figure 10 montre le spectre de ¹⁹F MAS RMN d'un grain micrométrique en fluorure de graphite commercial de composition CF_{0.92},
- la figure 11 montre le spectre de résonance paramagnétique électronique d'un grain micrométrique en fluorure de graphite commercial de composition CF_{0.92},
- la figure 12 montre les spectres de ¹⁹F MAS RMN de nanodisques de carbone sous fluoré ayant la composition CF_{0,80} formulé en électrode composite, avant décharge, déchargé exactement à la capacité théorique (788 mAh/g) et avec une capacité supérieure à C_{théorique} soit 955 mAh/g (de haut en bas).
- la figure 13 montre le spectre de ¹⁹F MAS RMN de nanodisques fluorés avec F₂ (notés D500) ayant la composition CF_{0.96} et de nanodisques selon l'exemple 3 fluorés avec TbF₄ (notés C500 et C550) ayant la composition CF_{0.70} et CF_{0.95}, respectivement,
- la figure 14 montre le spectre de résonance paramagnétique électronique de nanodisques selon l'exemple 3 (noté C550) et de composition CF_{0.95}, et le spectre de résonance paramagnétique électronique du graphite pur (noté D500 de composition CF_{0.96}),
- la figure 15 montre le spectre de ¹⁹F MAS RMN de nanotubes sous fluoré avec peu de parois (few-walled carbon nanotubes FWCNT) selon l'exemple 5 ayant la composition CF_{0,37},
- la figure 16 montre le spectre de ¹³C MAS RMN des nanotubes sous fluoré avec peu de parois (few-walled carbon nanotubes, FWCNT) selon l'exemple 5 et de composition CF_{0.37} dont le spectre de ¹⁹F RMN est montré en figure 15,
- la figure 17 montre le spectre de ¹⁹F MAS RMN de nanotubes double parois ayant la composition CF_{0.37},
- la figure 18 représente le spectre de ¹³C MAS RMN de nanotubes double parois, ayant la composition CF_{0.37}, et dont le spectre de ¹⁹F MAS RMN est représenté en figure 17,
- la figure 19 montre le spectre de résonance paramagnétique électronique de grains micrométriques selon l'exemple 2 et de composition CF_{0,59},
- la figure 20 montre le spectre de ¹⁹F MAS RMN de grains micrométriques utilisés dans l'exemple 2 et de composition CF_{0,59}.
- la figure 21 montre les spectres ¹⁹F MAS RMN d'une électrode composite incluant un graphite fluoré commercial de composition CF_{0.92} en fonction de la profondeur de décharge électrochimique (PdD de 0 à 100% correspondant à des capacités nulle et de 818 mAh/g, respectivement)

Les spectres de RMN du carbone 13 (¹³C MAS RMN) ont été obtenus en prenant comme référence le TMS, et les spectres de RMN du fluor 19 (¹⁹F MAS RMN) ont été obtenus en prenant comme référence CFCl₃.

Dans le présent texte, les termes suivants ont les significations suivantes :
- "empilement de nanodisques en carbone" désignent un mélange de nanodisques et de nanocônes en carbone, n'ayant pas subi de fluoration et formant des empilements. Ces empilements ont une épaisseur comprise entre 10 et 70 nm, de préférence ont une épaisseur de 35 nm, et un diamètre compris entre 0,6 et 2,8 µm, de préférence un diamètre de 1,5 µm,
- "empilement de nanodisques en carbone sous fluoré" désignent un empilement de nanodisques en carbone tels que définis ci-dessus après application du procédé de sous fluoration.

Ce procédé de sous fluoration en utilisant le fluor moléculaire F₂ est le procédé décrit dans Zhang et al. "Effect of graphitization on fluorination of carbon nanocones and nanodics", Carbon, Elsevier, vol. 47, no.12, (2009), pages 2763-2775. Les empilements ont subi un gonflement irrégulier du fait de l'application du procédé de sous fluoration par F₂.

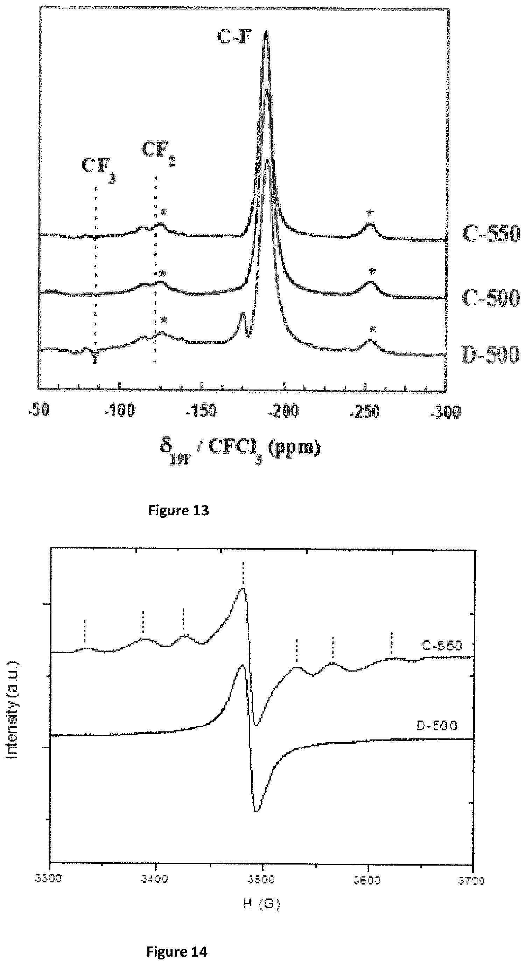

Cependant, dans le cas des empilements de nanodisques en carbone sous fluoré de l'invention, bien que le précurseur carboné (graphitisé à 2700°C) soit identique, le gonflement est régulier et l'ordre dans les parties fluorées est supérieur du fait de l'application du procédé de sous fluoration avec TbF₄. Le fluor atomique libéré par le chauffage de TbF₄ entraine les caractéristiques suivantes : les nanodisques de l'invention (noté C550) présentent non seulement un seul pic en spectrométrie RMN du fluor 19 (¹⁹F MAS RMN) mais aussi un spectre de résonance paramagnétique comprenant 7 signaux entre 3 200 et 3800 G, comme montré respectivement en figures 13 et 14, respectivement. Les nanodisques utilisés dans l'invention se différencient donc de ceux qui ont été décrits dans cet article obtenu par F₂ (noté D-500). De plus, contrairement aux nanodisques décrits dans cet article, les nanodisques en carbone sous fluoré selon l'invention, présentent une capacité, lorsqu'utilisé en tant qu'électrode, supérieure à la capacité théorique, comme montré à l'exemple 3.

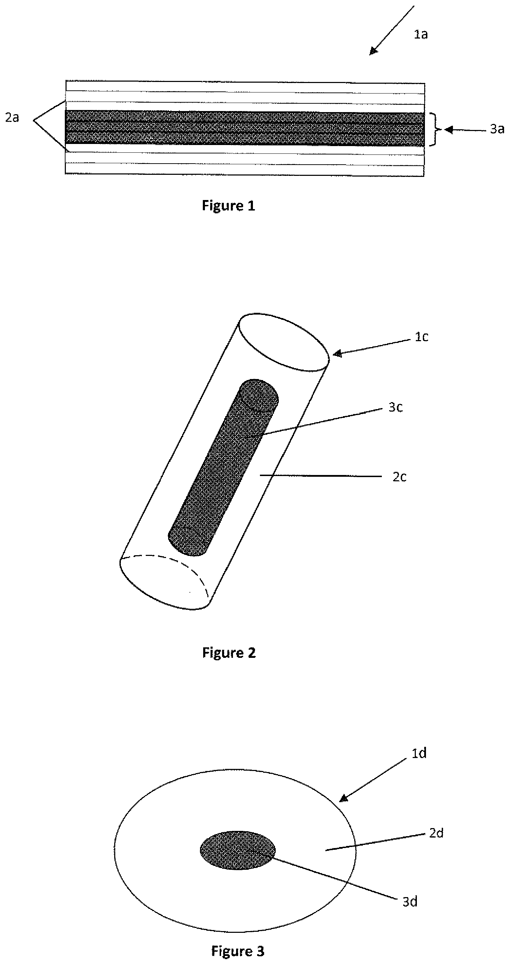

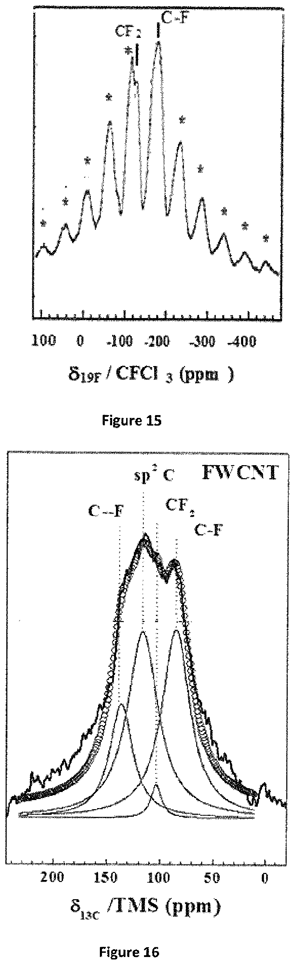

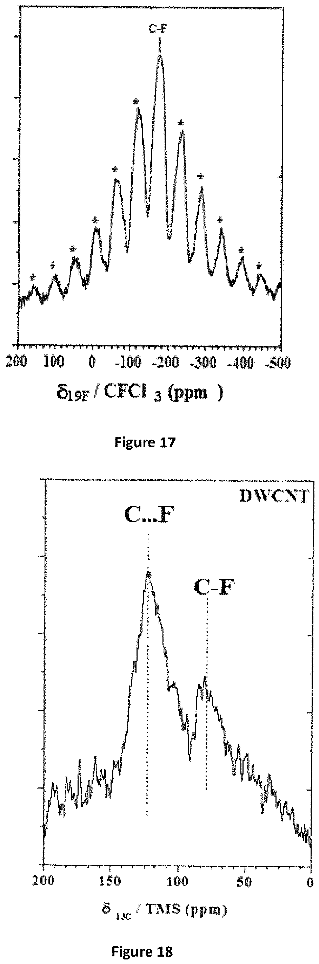

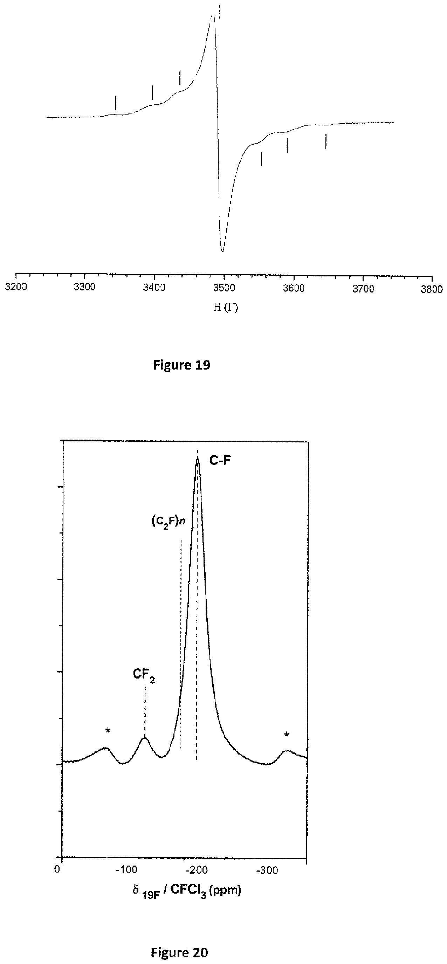

Le gonflement de ces empilements de nanodisques dû à l'application du procédé de sous fluoration, fait qu'ils ont une épaisseur comprise entre 12 et 123 nm, de préférence une épaisseur de 62 nm, et un diamètre compris entre 0,6 et 2,8 µm, de préférence un diamètre de 1,5 µm,
- "nanotubes en carbone double parois" désignent des nanotubes en carbone n'ayant pas subi le procédé de fluoration et ayant un diamètre compris entre 0,5 et 1,5 nm et une longueur comprise entre 5 et 20 µm,
- "nanotubes double parois en carbone sous fluoré" désignent des nanotubes en carbone double parois tels que définis ci-dessus ayant subi le procédé de fluoration décrit dans WO 2007/098478 A2. Ces nanotubes en carbone sous fluoré ont un diamètre compris entre 1 et 2,7 nm et une longueur allant de 5 à 20 µm. Leur spectre de ¹⁹F MAS RMN présente un seul pic entre -150 et -190 ppm/CFCl₃ (hors bandes de rotation), lié aux liaisons C-F covalentes, comme montré en figure 17, et leur spectre de RMN du carbone 13 (¹³C MAS RMN) (Figure 18) présente une bande à 120 ppm/TMS (hors bandes de rotation), ce qui n'avait pas été identifié dans le document WO 2007/098478 A2, dans lequel les spectres de RMN de tels nanotubes ayant moins de 30 parois ne sont pas présentés. Sans vouloir être liés par une telle théorie, les inventeurs pensent que les nanotubes utilisés dans l'invention ayant moins de 30 parois ne peuvent pas présenter de pic supplémentaire entre -150 ppm/CFCl₃ et-190 ppm/CFCl₃ (hors bandes de rotation) correspondant à une structure graphite fluoré de type (C₂F)ᵤ, car ils ne peuvent être graphitisés en raison de leurs faibles rayons de courbure, ce qui n'avait pas été identifié dans WO 2007/098478 A2.
- "nanotubes multiparois en carbone" désignent des nanotubes multiparois en carbone n'ayant pas subi le procédé de fluoration, ayant un diamètre compris entre 1,5 et 30 nm et une longueur comprise entre 5 et 20 µm,
- "nanotubes multiparois en carbone sous fluoré" désignent des nanotubes multiparois en carbone tels que définis ci-dessus ayant subi le procédé de fluoration décrit dans WO 2007/098478 A2. Ces nanotubes multiparois en carbone sous fluoré ont un nombre de parois inférieur à 30. Ils ont un diamètre compris entre 1,8 et 54 nm et une longueur comprise entre 5 à 20 µm. Nous faisons une distinction avec les FWCNTs pour few-walled carbon nanotubes (tubes avec peu de parois). Leur spectre de ¹⁹F MAS RMN présente un seul pic entre -150 et -190 ppm/CFCl₃ (hors bandes de rotation), lié aux liaisons C-F covalentes, comme montré en figures 15, et leur spectre de ¹³C MAS RMN (figure 16) présente un pic à 120 ppm/TMS. Ces caractéristiques n'ont également pas été identifiées dans le document WO 2007/098478 A2, dans lequel les spectres de RMN de ces nanotubes multiparois ne sont pas présentés,
- "grains micrométriques dont la plus grande dimension est comprise entre 1 et 10 µm en carbone de structure cristalline graphite" désignent des grains en carbone de structure cristalline graphite n'ayant pas subi le procédé de fluoration et ayant leur plus grande dimension comprise entre 1 et 10 µm,
- "grains micrométriques dont la plus grande dimension est comprise entre 1 et 10 µm en carbone sous fluoré de structure cristalline graphite" désignent des grains en carbone de structure cristalline graphite tels que définis ci-dessus ayant subi le procédé de fluoration décrit dans Zhang *et al.,* précédemment cité. Ces grains ont leur plus grande dimension comprise entre 1 et 10 µm. Leur spectre de ¹⁹F MAS RMN présente un seul pic entre -150 et -190 ppm/CFCl₃(hors bandes de rotation), lié aux liaisons C-F covalentes, et leur spectre de résonance paramagnétique électronique présente 7 signaux entre 3 200 et 3 800 G en bande X, comme montré en figures 20 et 19, respectivement. Les grains micrométriques en carbone sous fluoré utilisés dans l'invention sont représentés schématiquement en figures 1 à 3.

Les grains micrométriques en carbone sous fluoré utilisés dans l'invention ont tous en commun de comporter une partie centrale en carbone non fluoré et une partie périphérique en carbone fluoré de formule CFₓ où x représente le rapport atomique C/F compris entre 0,25 et 1,1, exclus. Cette partie centrale sert de renfort aux grains micrométriques en carbone sous fluoré utilisés dans l'invention.

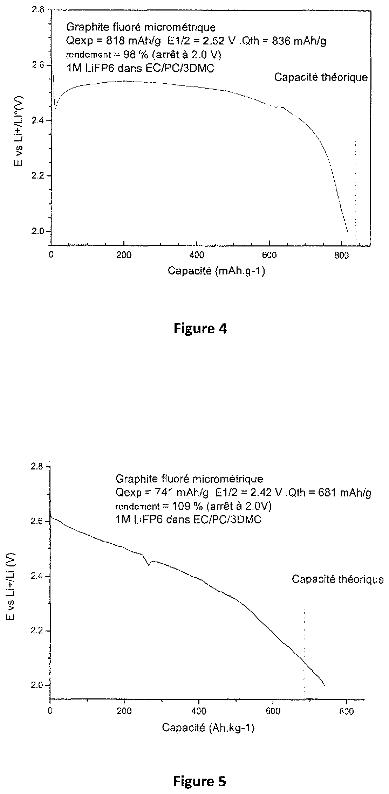

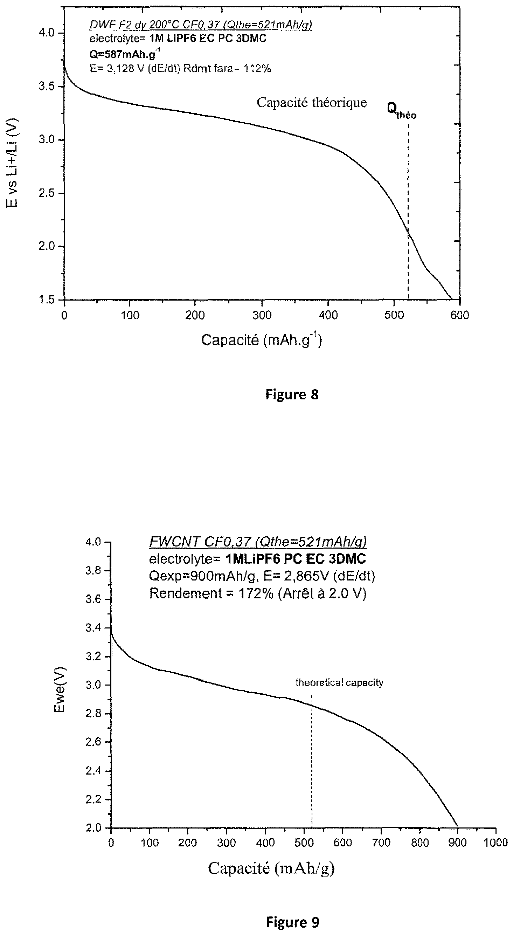

Ils ont également tous en commun de présenter un spectre de ¹⁹F MAS RMN présentant un seul pic entre -150 et -190 ppm/CFCl₃ (hors bandes de rotation), lié aux liaisons C-F covalentes, ce qui n'avait jamais été noté dans l'art antérieur. Les spectres de ¹⁹F MAS RMN des nanoobjets décrits dans WO 2007/098478 A2 (figure 3), WO 2007/126436 A2 (figure 9a), US 2007/231696 (figure 9), Yasser Ahmad et al. "The synthesis of multilayer graphene materials by the fluorination of carbon nanodiscs/nanocores" Carbon, vol. 50, no.10, 9 avril 2012 (2012-04-09), pages 3897-3908 (figure 5) et Zhang *et al.* précédemment cité (figure 3) présentent tous 2 pics entre -150 et 190 ppm/CFCl₃ (hors bandes de rotation).

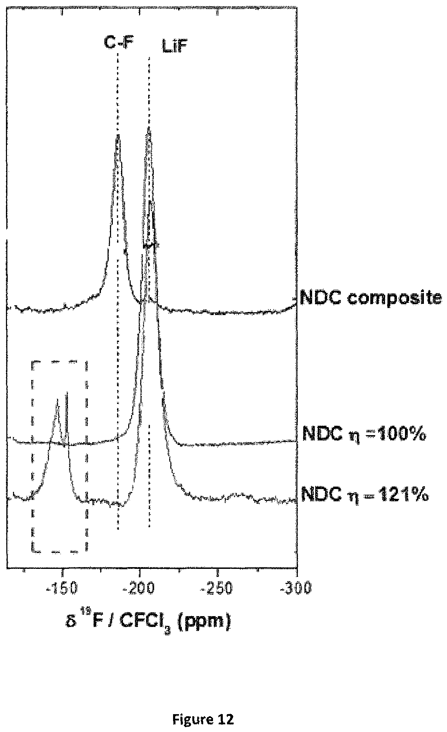

De plus, tous, après utilisation dans une pile au lithium, présentent un pic additionnel à environ -175 ppm dans leur spectre de ¹⁹F MAS RMN relié aux espèces Li₂F⁺ inséré (Figure 12).

Cela permet, après fabrication d'un lot de tels grains micrométriques, de vérifier sur un échantillon, que les caractéristiques de RMN voulues avant et après utilisation sont bien présentes et que, ainsi, le lot de grains micrométriques peut être utilisé pour obtenir une électrode ayant une capacité supérieure à la capacité théorique du grain micrométrique.

Dans l'invention, les grains micrométriques peuvent être en mélange avec un ou plusieurs nanoobjets décrits ci-dessous, c'est-à-dire de nanodisques, de nanosphères et de nanotubes double ou multiparois, en carbone sous fluoré.

La première catégorie de nanoobjets en carbone sous fluoré utilisés dans l'invention est représentée schématiquement, en coupe, en figure 1.

Il s'agit d'un empilement, noté la en figure 1, de nanodisques.

Les nanodisques centraux, notés 3a en figure 1, de cet empilement 1 a sont constitués uniquement de carbone non fluoré.

Les nanodisques, notés 2a en figure 1, situés sous et au dessus des nanodisques 3a, sont eux, en carbone sous fluoré.

Bien qu'en figure 1, les nanodisques 2a soient représentés comme entièrement en carbone non fluoré, ils peuvent être en carbone sous fluoré uniquement sur les bords externes.

En effet, ces nanodisques en carbone sous fluoré ont été obtenus par fluoration avec un agent fluorant solide (TbF₄) dans un réacteur en chauffant à des températures comprises entre 480 et 520°C de nanodisques en carbone commerciaux. Le taux de fluor total injecté dans le réacteur a été calculé de sorte que le rapport atomique F/C soit compris entre 0,20 et 0,95.

Il s'agit en réalité d'un mélange de nanodisques en carbone et de nanocônes en carbone car les "nanodisques" en carbone commerciaux sont livrés en mélange avec des nanocônes (70/20/10 % en masse, par rapport à la masse totale, pour les disques, cônes et carbones amorphes, respectivement).

Par cette méthode de synthèse sont obtenus des empilements 1a de nanodisques en carbone sous fluoré d'une épaisseur comprise entre 12 et 123 nm et d'un diamètre compris entre 0,6 et 2,8 µm. De préférence, cet empilement total de nanodisques a une épaisseur de 62 nm pour un diamètre de 1,5 µm. L'augmentation de l'épaisseur est liée à un gonflement dû à l'incorporation des atomes de fluor entre les feuillets carbonés. Le diamètre des nanodisques varie peu durant la fluoration.

Les nanodisques 3a centraux sont en carbone non fluoré et représentent de 6 à 14% en volume, par rapport au volume total de l'empilement 1a de nanodisques.

Le spectre de résonance paramagnétique électronique (RPE) présente 7 signaux entre 3 200 et 3 800 G en bande X (Figure 14).

L'ensemble de ces caractéristiques permet d'obtenir des nanodisques en carbone sous fluoré permettant d'obtenir, lorsqu'ils sont utilisés en tant qu'électrode, une électrode ayant une capacité supérieure à la capacité théorique, comme cela est montré à l'exemple 2.

Il est à noter que les nanodisques décrits dans Zhang et al. "Effect of graphitization on fluorination of carbon nanocones and nanodics", Carbon, Elsevier, Oxford, GB, vol. 47, no.12, (2009), pages 2763-2775, précédemment cité ne présentent pas un spectre de résonance paramagnétique électronique ayant 7 signaux entre 3 200 et 3 800 G, comme on le voit en figure 14 de ce document.

Et d'ailleurs, les nanodisques étudiés dans ce document n'ont pas une capacité supérieure à leur capacité théorique, lorsqu'ils sont utilisés en tant qu'électrode.

Les nanoobjets utilisés dans l'invention peuvent être également des nanotubes double parois en carbone sous fluoré.

De tels nanotubes double parois en carbone sous fluoré sont représentés schématiquement, en coupe, en figure 2.

Ces nanotubes en carbone sous fluoré ont un diamètre compris entre 1 et 2,7 nm et une longueur comprise entre 5 et 20 µm.

Ces nanotubes en carbone sous fluoré comprennent une partie périphérique, notée 2c en figure 2, en carbone fluoré de formule CFₓ ou x représente le rapport atomique F/C et est tel que 0,25 < x < 1,1, alors que le tube central, noté 3c en figure 3, est en carbone non fluoré.

Ainsi, la partie centrale 3c de ces nanoobjets en carbone non fluoré est le tube central.

Ces nanotubes en carbone sous fluoré double parois ont été obtenus par fluoration directe de nanotubes en carbone double parois avec du gaz F₂ pur, comme décrit dans WO 2007/098478 A2

La température de réaction était comprise entre 250 et 350°C et le temps de réaction était de 3 heures.

Le gaz fluor était en écoulement dans un réacteur Monel contenant des nanotubes de carbone double parois non fluoré.

Le taux de fluor total injecté était tel que le rapport atomique F/C est compris entre 0,20 et 0,60.

Les nanoobjets utilisés dans l'invention peuvent également être des nanotubes multiparois en carbone sous fluoré avec un nombre de parois limité à 30.

Ils ont été obtenus par fluoration directe de nanotubes en carbone multiparois avec du gaz F₂ pur, comme décrit dans WO 2007/098478 A2. Le rapport F/C utilisé pour la fluoration de ces nanotubes de carbone multiparois était compris entre 0,20 et 0,80.

Ces nanotubes en carbone sous fluoré multiparois comprennent également une partie externe en carbone fluoré dont le rapport F/C atomique est compris entre 0,25 et 1,1, exclus.

Dans les nanotubes multiparois en carbone sous fluoré utilisés dans l'invention, seul le tube central est intact.

Les nanotubes en carbone sous fluoré double parois ou multiparois utilisés dans l'invention présentent, de plus, une bande à 120 ppm/TMS dans leur spectre de ¹³C MAS RMN (hors bandes de rotation).

La température de réaction était comprise entre 300 et 400°C et le temps de réaction était de 3 heures.

Enfin, les nanoobjets utilisés dans l'invention peuvent être des grains micrométriques de graphite sous fluoré tels que représentés en figure 3.

Ces grains micrométriques ont leur plus grande dimension comprise entre 1 et 10 µm.

Ils comprennent une partie centrale, notée 3d en figure 3, en carbone non fluoré et une partie périphérique, notée 2d en figure 3.

La partie périphérique 2d a un rapport atomique F/C compris entre 0,25 et 1,1, bornes exclues.

La partie centrale 3d en carbone non fluoré représente de 0,8 à 30% en volume du volume total du grain en carbone sous fluoré, noté 1d en figure 4.

Ces grains ont été obtenus par fluoration rapide à haute température (500 à 600°C) pendant de quelques minutes à quelques dizaines de minutes de grains en carbone de structure graphite.

La fluoration rapide est effectuée à haute température (500-600°C) avec du fluor moléculaire F₂ sous forme gazeuse ajouté pendant un temps court, compris entre 20 minutes et 120 minutes, comme décrit dans Zhang *et al.,* précédemment cité.

Cette fluoration rapide est effectuée dans un réacteur en nickel passivé de volume variable contenant des grains en carbone de structure graphite non fluoré. Les conditions dépendent du volume du four et de la quantité de carbone.

Le taux de fluor x dans CFx introduit a été calculé, pour cette fluoration rapide, pour être compris entre 0,20 et 0,80, bornes incluses.

Les grains de carbone sous fluorés utilisés dans l'intention présentent 7 signaux entre 3 200 et 3 800 G en bande X dans leur spectre de résonance paramagnétique électronique (Figure 19).

L'électrode obtenue par l'utilisation de ces grains micrométriques est également un objet de l'invention.

Ces électrodes ont, de façon surprenante, une surcapacité, exprimée en rendement faradique (100% pour la capacité théorique), lorsqu'intégrées dans une batterie primaire au lithium, de 125 à 140% pour une électrode composée de nanodisques, de 114% pour une électrode composée de nanosphères de carbone, de 170% pour des nanotubes double parois ou multiparois et de 109% pour des électrodes constituées de microsphères de graphite.

Il est à noter que lorsque l'on utilise des nanofibres en carbone sous fluoré ou des nanotubes en carbone sous fluoré multiparois d'un diamètre supérieur ou égal à 150 nm, pour fabriquer des électrodes, aucune surcapacité notable n'a été notée.

Ainsi, l'invention concerne également une électrode de pile au lithium caractérisée en ce qu'elle comprend des grains micrométriques en carbone sous fluoré tels que décrits précédemment.

Elle concerne également une pile au lithium comprenant une telle électrode .

Afin de mieux faire comprendre l'invention, on va décrire maintenant à titre d'exemples purement illustratifs et non limitatifs plusieurs modes de mise en oeuvre.

### Exemple 1 comparatif.

Un graphite fluoré commercial présentant des grains micrométriques de composition CF_{0,92} est utilisé pour former une électrode qui est placée dans une pile au lithium.

L'électrode est testée en décharge galvanostatique avec une densité de courant de 10 mA/g (C/100) avec un électrolyte EC/PC/3DMC-LiPF₆ 1 M.

Afin de favoriser la cinétique de diffusion des ions lithium et donc d'évaluer au mieux les performances de cette électrode (cathode) en terme de capacité, des faibles densités de courant ont été appliquées (C/100).

La courbe obtenue est représentée en figure 4.

Comme on le voit en figure 4, la capacité mesurée de cette électrode est égale à 818 mAh/g (avec un potentiel d'arrêt de 2 V) pour une valeur théorique de 836 mAh/g soit un rendement faradique de 98 %.

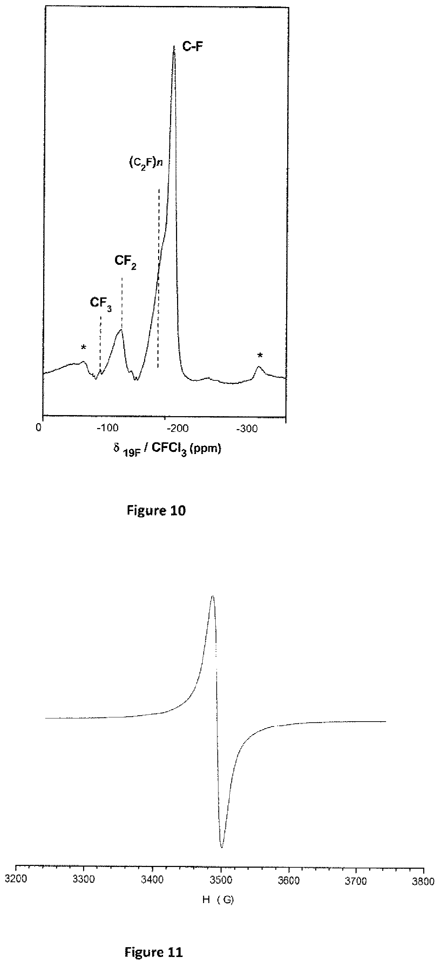

Comme on le voit sur la figure 10, ce graphite fluoré commercial de composition CF_{0,92} présente 2 pics en RMN du fluor 19 (MAS) à - 190 et -175 ppm/CFCl₃ (hors bandes de rotation) contrairement aux produits de l'invention.

La figure 11 montre que le spectre de résonance parmagnétique électronique du graphite fluoré commercial de composition CF_{0.92} ne présente q'un signal unique entre 3200 et 3800 G en bande X.

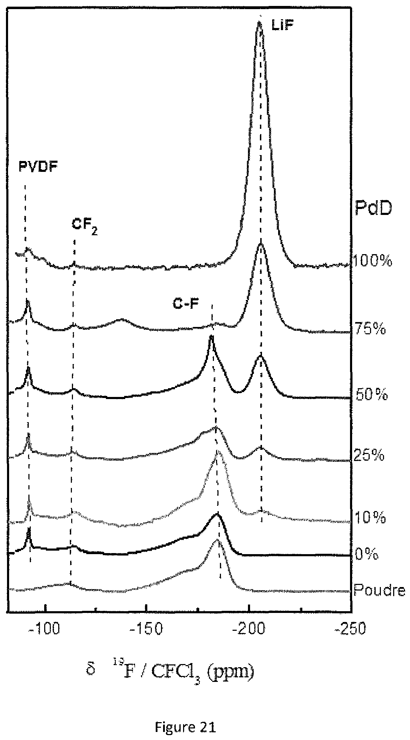

Comme le montre la figure 21, à l'issue d'une décharge à la capacité maximale de 818 mAh/g, le spectre ¹⁹F MAS RMN ne présente pas le pic à -150 ppm/CFCl₃ en raison du non-dépassement de la capacité théorique.

### Exemple 2.

On a utilisé ici des grains micrométriques en carbone sous fluoré obtenus par fluoration flash, selon l'invention. La composition chimique est CF_{0.59}.

Dans ce cas, les zones en carbone fluoré sont localisées sur la périphérie du grain.

La figure 19 montre le spectre de résonance paramagnétique électronique des grains micrométriques utilisés. On voit en figure 19 que ce spectre de résonance paramagnétique électronique présente 7 signaux entre 3 200 et 3800 G, alors que le spectre de résonance paramagnétique électronique d'un grain micrométrique en graphite fluoré commercial, de composition CF_{0,92} n'en comporte qu'un, comme montré en figure 11.

La figure 20 montre le spectre de ¹⁹F MAS RMN des grains micrométriques utilisés dans l'invention. On voit en figure 20 que ce spectre comprend un seul pic entre -150 et 190 ppm/CFCl₃ (hors bandes de rotation) alors que le spectre de ¹⁹F MAS RMN d'un grain micrométrique en fluorure de graphite commercial CF_{0,92}, représenté en figure 10, en présente un supplémentaire, il montre la présence d'une phase (C₂F)n.

Lorsque ces grains ont été utilisés pour former une cathode de pile au lithium, qui a été testée en décharge galvanostatique à 10 mA/g (C/100) avec un électrolyte éthylène carbonate/propylène carbonate/ 3 diméthyl carbonate (EC/PC/3DMC)-LiPF₆ 1 M, on obtient la courbe représentée en figure 5.

Comme on le voit à partir de la figure 5, la capacité est de 741 mAh/g, soit une surcapacité de 109%, la capacité théorique étant de 681 mAh/g.

### Exemple 3 facilitant la compréhension de l'invention.

Ici ce sont des nanodisques en carbone sous fluoré qui ont été utilisés.

Ces nanoobjets comprenaient un mélange de nanodisques (70% en masse) et de nanocônes (20 % en masse), (les 10 % en masse restants sont des carbones amorphes).

La composition de ces nanodisques et ces nanocônes dans leur partie fluoré étaient CF_{0,80}.

La figure 13 montre le spectre de ¹⁹F MAS RMN de ces nanodisques, qui sont notés C550 et C500 en figure 13.

On note la présence d'un seul pic entre -150 -190 ppm/CFCl₃ sur ce spectre (hors bandes de rotation).

La figure 13 montre également le spectre de ¹⁹F MAS RMN de nanodisques fluorés avec F₂ gaz pur (noté D500).

On constate la présence d'un pic supplémentaire sur le spectre de ¹⁹F MAS RMN

La figure 14 montre le spectre de résonance paramagnétique électronique de ces nanodisques (noté 550).

On voit la présence de 7 pics entre -3 300 et -3400 G sur ce spectre.

La figure 14 montre également le spectre de résonance paramagnétique électronique du graphite pur (noté D500).

On note que dans ce cas là il n'y a qu'un seul signal sur ce spectre.

Ces nanoobjets ont été utilisés pour former une électrode qui a été utilisée en tant que cathode d'une pile au lithium en utilisant un électrolyte EC/PC/3DMC-LiPF₆ 1 M.

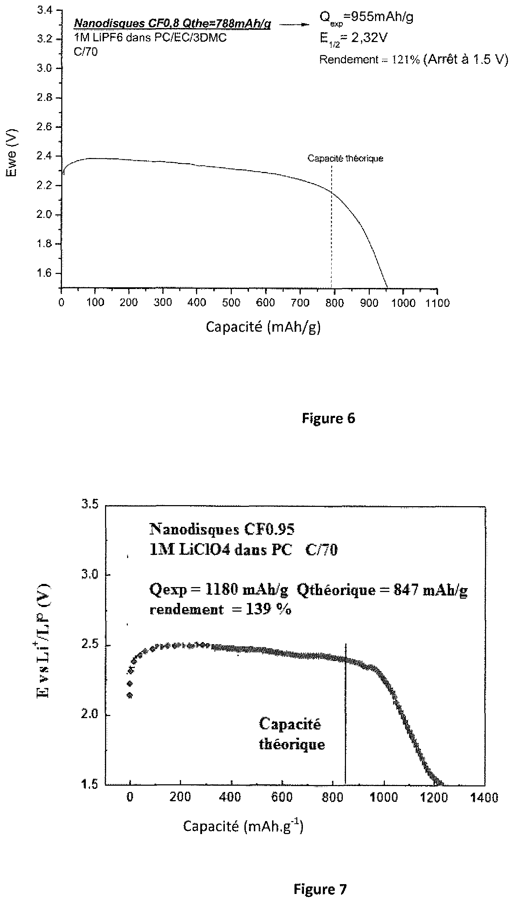

La courbe en décharge galvanostatique à 10 mA/g de ces nanoobjets est montrée en figure 6.

La valeur de la capacité obtenue est de 955 mAh/g, comme on le voit en figure 6, ce qui représente une surcapacité de 121% (théorique : 788 mAh/g).

Comme le montre la figure 12, le spectre de ¹⁹F RMN de ces nanodisques, après utilisation en pile et obtention de l'extracapacité, présente un pic supplémentaire à -150 ppm/CFCl₃.

### Exemple 4 facilitant la compréhension de l'invention.

Ici ce sont des nanodisques en carbone sous fluoré qui ont été utilisés.

Ces nanoobjets comprenaient un mélange de nanodisques et de nanocônes.

La composition de ces nanodisques et ces nanocônes dans leur partie fluoré correspondait à la formule CF_{0,95}.

Ces nanoobjets ont été utilisés pour former une électrode qui a été utilisée en tant que cathode d'une batterie au lithium en utilisant un électrolyte PC-LiClO₄ 1 M.

La courbe en décharge galvanostatique à 10 mA/g de ces nanoobjets est montrée en figure 7.

La valeur de la capacité obtenue est de 1180 mAh/g, comme on le voit en figure 7, ce qui représente une extracapacité de 39 % (847 mAh/g en théorie).

### Exemple 5 facilitant la compréhension de l'invention.

Les nanoobjets utilisés à cet exemple sont des nanotubes en carbone sous fluoré avec peu de parois (few-walled carbon nanotubes FWCNT).

La figure 15 montre le spectre de ¹⁹F RMN de ces nanotubes.

On note la présence d'un seul pic isotrope entre -150 et -190ppm/CFCl₃ (hors bandes de rotation), lié aux liaisons C-F covalentes.

La figure 16 représente le spectre de ¹³C MAS RMN de ces nanotubes.

On note la présence d'une bande à 120 ppm/TMS (hors bandes de rotation).

Ces nanotubes ont été utilisés pour former une électrode. Pour cela on a mélangé 80% en masse de ces nanotubes avec 10% en masse de PVDF et 10% en masse de carbone, par rapport à la masse totale de l'électrode formée.

Ainsi, on voit de ce qui précède, que les grains micrométriques de l'invention n'avaient jamais été décrits auparavant et qui, de façon surprenante, permettent d'obtenir une électrode, qui, lorsqu'utilisée dans une pile au lithium, permet d'obtenir une capacité supérieure à la capacité théorique du grain micrométrique fluoré.

Lorsqu'utilisés pour former une électrode (cathode) d'une batterie au lithium, ils présentent une capacité de 900 mAh/g, soit une surcapacité théorique de 173% (521 mAh/g en théorie), comme on le voit en figure 9 qui représente la courbe de décharge galvanostatique à C/70 de ces nanotubes de carbone.

L'électrolyte utilisé était EC/PC/3DMC-LiPF₆ 1 M.

## Revendications

1. Utilisation de grains micrométriques (Id) en carbone sous fluoré de structure cristalline graphite dont la plus grande dimension est comprise entre 1 et 10 µm, lesdits grains micrométriques comprenant :
- une partie centrale (3a, 3b, 3c, 3d) en carbone non fluoré qui représente de 0,8 à 30%, en volume, du volume total du grain (Id), et
- une partie périphérique (2a, 2b, 2c, 2d) en carbone fluoré de formule CFx où x représente le rapport atomique F/C et est tel que 0,25 < x < 1,1, et dont le spectre de ¹⁹F MAS RMN présente un seul pic isotrope entre -150 et -190 ppm / CFCl₃ hors bande de rotation, et dont le spectre de résonance paramagnétique électronique présente 7 signaux entre 3 200 et 3 800 G en bande X pour la fabrication d'électrodes de batterie primaire au lithium ayant une capacité supérieure à 100% de la capacité théorique du grain micrométrique.

2. Utilisation selon la revendication 1, dans laquelle les grains micrométriques sont en mélange avec un ou plusieurs nanoobjets choisis parmi :
- un empilement (la) de nanodisques en carbone sous fluoré d'un diamètre compris entre 0,6 et 2,8 µm, ou d'un diamètre de 1,5 µm, et d'une épaisseur comprise entre 12 et 123 nm, ou d'une épaisseur de 62 nm, dont la partie centrale (3a) en carbone non fluoré représente de 6 à 14% en volume du volume total de l'empilement de nanodisques (Ia) et la partie extérieure de formule CFx où x représente le rapport atomique F/C et est tel que 0,25 < x < 1,1 est fluorée et dont le spectre de résonance paramagnétique électronique présente 7 signaux entre 3 200 et 3 800 G en bande X
- des nanotubes en carbone sous fluoré double parois (Ie) d'un diamètre compris entre 1 et 2,7 nm et d'une longueur comprise entre 5 et 20 µm, dont le nanotube central (3c) en carbone non fluoré représente de 45 à 65% en volume, ou 60% en volume, du volume total des nanotubes (Ie) et dont le spectre de ¹³C MAS RMN présente une bande à 120 ppm/TMS (tétraméthylsilane), et
- des nanotubes en carbone sous fluoré multiparois d'un diamètre compris entre 1,8 et 54 nm et d'une longueur comprise entre 5 et 20 µm et dont le nanotube central en carbone non fluoré représente de 3 à 60% en volume du volume total des nanotubes multiparois, comprenant moins de 30 parois et dont le spectre de ¹³C MAS RMN présente une bande à 120 ppm/TMS.

3. Electrode de batterie primaire au lithium **caractérisée en ce qu'**elle comprend des grains micrométriques (Id) en carbone sous fluoré de structure cristalline graphite dont la plus grande dimension est comprise entre 1 et 10 µm, lesdits grains comprenant :
- une partie centrale (3a, 3b, 3c, 3d) en carbone non fluoré qui représente de 0,8 à 30%, en volume, du volume total du grain (Id) et
- une partie périphérique (2a, 2b, 2c, 2d) en carbone fluoré de formule CFx où x représente le rapport atomique F/C et est tel que 0,25 < x < 1,1, et dont le spectre de ¹⁹F MAS RMN présente un seul pic isotrope entre -150 et -190 ppm / CFCl₃ hors bande de rotation, et dont le spectre de résonance paramagnétique électronique présente 7 signaux entre 3 200 et 3 800 G en bande X,
la batterie primaire ayant une capacité supérieure à 100% de la capacité théorique du grain micrométrique.

4. Electrode selon la revendication 3, dans laquelle les grains micrométriques sont en mélange avec un ou plusieurs nanoobjets choisis parmi:
- un empilement (Ia) de nanodisques en carbone sous fluoré d'un diamètre compris entre 0,6 et 2,8 µm, ou d'un diamètre de 1,5 µm, et d'une épaisseur comprise entre 12 et 123 nm, ou d'une épaisseur de 62 nm, dont la partie centrale (3a) en carbone non fluoré représente de 6 à 14% en volume du volume total de l'empilement de nanodisques (Ia) et et la partie extérieure de formule CFx où x représente le rapport atomique F/C et est tel que 0,25 < x < 1,1 est fluorée et dont le spectre de résonance paramagnétique électronique présente signaux entre 3 200 et 3 800 G en bande X,
- des nanotubes en carbone sous fluoré double parois (Ie) d'un diamètre compris entre 1 et 2,7 nm et d'une longueur comprise entre 5 et 20 µm, dont la partie centrale (3c) en carbone non fluoré représente de 45 à 65% en volume, ou 60% en volume, du volume total des nanotubes (Ie) et dont le spectre de ¹³C MAS RMN présente une bande à 120 ppm/TMS, et
- des nanotubes en carbone sous fluoré multiparois d'un diamètre compris entre 1,8 et 54 nm et d'une longueur comprise entre 5 et 20 µm et dont la partie centrale en carbone non fluoré représente de 3 à 60% en volume du volume total des nanotubes multiparois, comprenant moins de 30 parois et dont le spectre de ¹³C MAS RMN présente une bande à 120 ppm/TMS.

5. Pile au lithium primaire **caractérisée en ce qu'**elle comprend une électrode selon la revendication 3 ou 4.

## Patentansprüche

1. Verwendung von mikrometrischen Körnchen (Id) aus subfluoriniertem Kohlenstoff mit kristalliner Graphitstruktur, deren größte Abmessung zwischen 1 und 10 µm liegt, wobei die mikrometrischen Körnchen Folgendes umfassen :
- einen zentralen Bereich (3a, 3b, 3c, 3d) aus nicht fluoriniertem Kohlenstoff, der 0,8 bis 30 Vol.-% des Gesamtvolumens des Körnchens (Id) beträgt, und
- einen peripheren Bereich (2a, 2b, 2c, 2d) aus fluoriniertem Kohlenstoff der Formel CFx, worin X das Atomverhältnis F/C darstellt und derart ist, dass 0,25 < x < 1,1 ist, und dessen ¹⁹F MAS NMR Spektrum abgesehen von dem Rotationsband eine einzige isotrope Spitze zwischen -150 und -190 ppm/CFCl₃ aufweist, und das paramagnetische Resonanzspektrum des Elektrons 7 Signale zwischen 3200 und 3800 G in dem X-Band aufweist,
zur Herstellung von Elektroden von primären Lithiumbatterien mit großer Kapazität, welche die theoretische 100 %-ige Kapazität des mikrometrischen Körnchens übersteigt.

2. Verwendung nach Anspruch 1, **dadurch gekennzeichnet, daß** die mikrometrischen Körnchen mit einem oder mehreren Nanoobjekten vermischt sind, ausgewählt aus:
- einem Stapel (Ia) subfluorinierter Nanoscheiben aus Kohlenstoff mit einem Durchmesser zwischen 0,6 und 2,8 µm oder einem Durchmesser von 1,5, und mit einer Dicke zwischen 12 und 123 nm, oder einer Dicke von 62 nm, dessen zentraler Bereich (3a) aus nicht fluoriniertem Kohlenstoff 6 bis 14 Vol-% des Gesamtvolumens des Staples der Nanoscheiben (Ia) darstellt und dessen äusserer Bereich der Formel CFx entspricht, wobei x das Atomverhältnis F/C darstellt und derart ist, dass 0,25 < x < 1,1 fluoriniert ist, und das elektronisches paramagnetische Resonanzspektrum des Elektrons 7 Signale zwischen 3200 und 3800 G in dem X-Band aufweist,
- doppelwandige Nanoröhrchen (Ie) aus subfluoriniertem Kohlenstoff mit einem Durchmesser zwischen 1 und 2,7 nm und einer Länge zwischen 5 und 20 µm, deren nicht fluoriniertes zentrales Nanoröhrchen 45 bis 65 Vol-% oder 60 Vol-% des Gesamtvolumens der Nanoröhrchen (Ie) aufweist und deren ¹³C MAS NMR Spektrum ein Band mit 120 ppm/TMS (Tetramethylsilan) aufweist, und
- mehrwändige Nanoröhrchen aus subfluoriniertem Kohlenstoff mit einem Durchmesser zwischen 1,8 und 54 nm und einer Länge zwischen 5 und 20 µm, und deren zentrales Nanoröhrchen aus nicht fluoriniertem Kohlenstoff 3 bis 60 Vol-% des Gesamtvolumens der mehrwändigen Nanoröhrchen darstellt, die mindestens 30 Wände umfassen, und deren ¹³C MAS NMR Spektrum ein Band mit 120 ppm/TMS (Tetramethylsilan) aufweist.

3. Primäre Lithium-Batterie-Elektrode, **dadurch gekennzeichnet, dass** sie mikrometrische Körnchen (Id) aus subfluoriniertem Kohlenstoff mit kristalliner Graphitstruktur umfasst, deren größte Abmessung zwischen 1 und 10 µm liegt, wobei die Körnchen Folgendes umfassen:
- einen zentralen Bereich (3a, 3b, 3c, 3d) aus nicht fluoriniertem Kohlenstoff, der 0,8 bis 30 Vol.-% des Gesamtvolumens des Körnchens (Id) beträgt, und
- einen peripheren Bereich (2a, 2b, 2c, 2d) aus fluoriniertem Kohlenstoff der Formel CFx, worin x das Atomverhältnis F/C darstellt und derart ist, dass 0,25 < x < 1,1 ist, und dessen ¹⁹F MAS NMR Spektrum abgesehen von dem Rotationsband eine einzige isotrope Spitze zwischen -150 und -190 ppm/CFCl₃ aufweist, und das paramagnetische Resonanzspektrum des Elektrons 7 Signale zwischen 3200 und 3800 G in dem X-Band aufweist,
wobei die Primärbatterie über eine Kapazität verfügt, welche die theoretische 100 %-ige Kapazität des mikrometrischen Körnchens übersteigt.

4. Elektrode nach Anspruch 3, **dadurch gekennzeichnet, daß** die mikrometrischen Körnchen mit einem oder mehreren Nanoobjekten vermischt sind, ausgewählt aus:
- einem Stapel (Ia) subfluorinierter Nanoscheiben mit einem Durchmesser zwischen 0,6 und 2,8 µm oder einem Durchmesser von 1,5 µm, und mit einer Dicke zwischen 12 und 123 nm, oder einer Dicke von 62 nm, dessen zentraler Bereich (3a) aus nicht fluoriniertem Kohlenstoff 6 bis 14 Vol-% des Gesamtvolumens des Stapels der Nanoscheiben (Ia) darstellt, und der äußere Bereich der Formel CFx entspricht, wobei x das Atomverhältnis F/C darstellt und derart ist, dass 0,25 < x < 1,1 fluoriniert ist und dessen elektronisches paramagnetisches Resonanzspektrum Signale zwischen 3200 und 3800 G in dem X-Band aufweist,
- doppelwandige Nanoröhrchen (Ie) aus subfluoriniertem Kohlenstoff mit einem Durchmesser zwischen 1 und 2,7 nm und einer Länge zwischen 5 und 20 µm, deren nicht fluorinierter zentraler Bereich (3c) 45 bis 65 Vol-% oder 60 Vol-% des Gesamtvolumens der Nanoröhrchen (Ie) darstellt und deren ¹³C MAS NMR Spektrum ein Band mit 120 ppm/TMS aufweist, und
- mehrwändige Nanoröhrchen aus subfluoriniertem Kohlenstoff mit einem Durchmesser zwischen 1,8 und 54 nm und einer Länge zwischen 5 und 20 µm, und deren zentraler Bereich aus nicht fluoriniertem Kohlenstoff 3 bis 60 Vol-% des Gesamtvolumens der mehrwändigen Nanoröhrchen darstellt, die mindestens 30 Wände umfassen, und deren ¹³C MAS NMR Spektrum ein Band mit 120 ppm/TMS aufweist.

5. Primäre Lithium-Batterie, **dadurch gekennzeichnet, dass** sie eine Elektrode nach Anspruch 3 oder 4 umfasst.

## Claims

1. The use of micrometric grains (1 d) made of subfluorinated carbon with a graphite crystalline structure, the greatest dimension of which is between 1 and 10 µm, said micrometric grains comprising:
- a central part (3a, 3b, 3c, 3d) made of nonfluorinated carbon which represents from 0.8 to 30% by volume of the total volume of the grain (1 d), and
- a peripheral part (2a, 2b, 2c, 2d) made of fluorinated carbon of formula CFx , where x represents the F/C atomic ratio and is such that 0.25 < x < 1.1, and the ¹⁹F MAS NMR spectrum of which exhibits a single isotropic peak between -150 and -190 ppm/CFCl₃, rotational bands excluded, and the electron paramagnetic resonance spectrum of which exhibits 7 signals between 3200 and 3800 G in the X band,
for the manufacture of primary lithium battery electrodes having a capacity greater than 100% of the theoretical capacity of the micrometric grain.

2. The use as claimed in claim 1, in which the micrometric grains are in a mixture with one or more nano-objects chosen from:
- a stack (1a) of subfluorinated carbon nanodisks with a diameter of between 0.6 and 2.8 µm, or with a diameter of 1.5 µm, and with a thickness of between 12 and 123 nm, or a thickness of 62 nm, the central part (3a) of which made of nonfluorinated carbon represents from 6 to 14% by volume of the total volume of the stack of nanodisks (1a) and the peripheral part of formula CFx , where x represents the F/C atomic ratio and is such that 0.25 < x < 1.1 and the electron paramagnetic resonance spectrum of which exhibits 7 signals between 3200 and 3800 G in the X band;
- double-walled subfluorinated carbon nanotubes (1e) with a diameter of between 1 and 2.7 nm and with a length of between 5 and 20 µm, the central nanotube (3c) of which made of nonfluorinated carbon represents from 45 to 65% by volume, or 60% by volume, of the total volume of the nanotubes (1e) and the ¹³C MAS NMR spectrum of which exhibits a band at 120 ppm/TMS (tetramethylsilane); and
- multi-walled subfluorinated carbon nanotubes with a diameter of between 1.8 and 54 nm and with a length of between 5 and 20 µm, the central nanotube of which made of nonfluorinated carbon represents from 3 to 60% by volume of the total volume of the multi-walled nanotubes, comprising less than 30 walls, and the ¹³C MAS NMR spectrum of which exhibits a band at 120 ppm/TMS.

3. A primary lithium battery electrode, **characterized in that** it comprises micrometric grains (1d) made of subfluorinated carbon with a graphite crystalline structure, the greatest dimension of which is between 1 and 10 µm, said grains comprising:
- a central part (3a, 3b, 3c, 3d) made of nonfluorinated carbon which represents from 0.8 to 30% by volume of the total volume of the grain (1 d), and
- a peripheral part (2a, 2b, 2c, 2d) made of fluorinated carbon of formula CFx, where x represents the F/C atomic ratio and is such that 0.25 < x < 1.1, and the ¹⁹F MAS NMR spectrum of which exhibits a single isotropic peak between -150 and -190 ppm/CFCl₃, rotational bands excluded, and the electron paramagnetic resonance spectrum of which exhibits 7 signals between 3200 and 3800 G in the X band,
the primary battery electrode having a capacity greater than 100% of the theoretical capacity of the micrometric grain.

4. The electrode as claimed in claim 3, in which the micrometric grains are in a mixture with one or more nano-objects chosen from:
- a stack (1a) of subfluorinated carbon nanodisks with a diameter of between 0.6 and 2.8 µm, or with a diameter of 1.5 µm, and with a thickness of between 12 and 123 nm, or with a thickness of 62 nm, the central part (3a) of which made of nonfluorinated carbon represents from 6 to 14% by volume of the total volume of the stack of nanodisks (1 a) and the peripheral part of formula CFx , where x represents the F/C atomic ratio and is such that 0.25 < x < 1.1 and the electron paramagnetic resonance spectrum of which exhibits 7 signals between 3200 and 3800 G in the X band;
- double-walled subfluorinated carbon nanotubes (1e) with a diameter of between 1 and 2.7 nm and with a length of between 5 and 20 µm, the central nanotube (3c) of which made of nonfluorinated carbon represents from 45 to 65% by volume, or 60% by volume, of the total volume of the nanotubes (1e) and the ¹³C MAS NMR spectrum of which exhibits a band at 120 ppm/TMS (tetramethylsilane); and
- multi-walled subfluorinated carbon nanotubes with a diameter of between 1.8 and 54 nm and with a length of between 5 and 20 µm, the central nanotube of which made of nonfluorinated carbon represents from 3 to 60% by volume of the total volume of the multi-walled nanotubes, comprising less than 30 walls, and the ¹³C MAS NMR spectrum of which exhibits a band at 120 ppm/TMS.

5. A primary lithium battery, **characterized in that** it comprises an electrode as claimed in claim 3 or 4.
